# EUROPEAN PATENT SPECIFICATION

(11) **EP 2 046 882 B1**
(45) Date of publication and mention of the grant of the patent: **02.09.2015**
(21) Application number: 07764716.2
(22) Date of filing: 19.06.2007
(51) Int. Cl.: C08K 5/00

(54) **FLAME RETARDANT THERMOPLASTIC COMPOSITION**
FLAMMHEMMENDE THERMOPLASTISCHE ZUSAMMENSETZUNG
COMPOSITION THERMOPLASTIQUE IGNIFUGE

(30) Priority: 28.07.2006 EP 06015751
(43) Date of publication of application: 15.04.2009
(73) Proprietor: DSM IP Assets B.V., 6411 TE Heerlen (NL)
(72) Inventor: SCHMIDT, Angelika, 52538 Selfkant (DE)
(74) Representative: van der Ploeg, Antonius Franciscus M.J.
(86) International application number: PCT/EP2007/005388
(87) International publication number: WO 2008/011941

(56) References cited:
- EP-A- 1 396 521
- EP-A2- 1 555 042
- WO-A-98/30632
- JP-A- 3 286 856
- JP-A- 52 150 474
- JP-A- 2001 294 674
- JP-A- 2004 273 121
- JP-A- 2004 281 057

## Description

The invention relates to a flame retardant thermoplastic composition comprising a thermoplastic elastomer and a halogen free flame retardant system and to a moulded part made thereof, more particular to a flexible thermoplastic composition having good flame retarding properties, wet-heat resistance and mechanical properties and also more particular to moulded parts selected from mechanical parts, electric and electronic parts, automobile parts, and housings and other parts of, for example, office automation apparatuses and household electronic appliances.

Flame retardant thermoplastic composition comprising a thermoplastic elastomer and a halogen free flame retardant system and moulded parts at least partly made and consisting thereof, are known from US patent US-5,298,544. US-5,298,544 describes a flame retardant thermoplastic moulding composition consisting essentially of a thermoplastic resin and a flame retardant. The thermoplastic resin is a copolyetherimide ester or a copolyether ester or a blend thereof. The copolyetherimide ester and the copolyether ester are both thermoplastic elastomers. The flame retardant is magnesium carbonate or a blend of magnesium carbonate and calcium carbonate having a combination of zinc borate or zinc oxide or a blend of zinc borate and zinc oxide. The known compositions of US-5,298,544 show flame retardancy properties according to UL-94 standard complying with a typical V2 rating for the copolyetherimide ester elastomer and V1 for the copolyether ester elastomer. For these ratings high loadings of flame retardants of about 50 wt.%, relative to the total weight of the moulding composition are used. The said known moulding compositions further comprise a stabilizer package in an amount of about 1.4 wt.%, relative to the total weight of the moulding composition and show elongation-at-break values in tensile test according to ASTM D638 close to 25%.

A disadvantage of the known compositions of US-5,298,544 is that in many applications of moulded parts made of flame retardant thermoplastic compositions, such high loadings and/or low elongations are not acceptable, whereas in particular cases a V2 or V1 rating is insufficient and a V0 rating is required.

The aim of the invention is to provide a flame retardant thermoplastic composition comprising a thermoplastic elastomer and a halogen free flame retardant system and a moulded part made thereof, which do not show these disadvantageous or in lesser extent, more particular the invention is aimed at a flame retardant thermoplastic composition and a moulded part made thereof, which show a V2 rating, and preferably a V1 rating or even a V0 rating according to UL-94-V standard at much lower filler loadings meanwhile having higher elongations than the known compositions. A further requirement is that the compositions should have a good hydrolysis resistance under hot, humid conditions.

This aim has been achieved with the flame retardant thermoplastic composition according to the invention and the moulded part made thereof, wherein
(i) the thermoplastic elastomer comprises a copolyester elastomer comprising (a) hard blocks consisting of and soft blocks consisting of segments of hard polyester polymers and soft blocks consisting of soft polyester polymers linked by urethane groups and
(ii) the halogen free flame retardant system comprises a nitrogen containing flame retardant.

The effect of flame retardant thermoplastic composition according to invention is that the thermoplastic composition has a flame retardancy performance complying with V2, V1 or even V0 ratings according to the UL-94-V, which ratings are obtained at loadings of the flame retardant system much lower than used for the flame retardant system in the known composition meanwhile also showing a much higher elongation at break than the known composition of US-5,298,544 having a comparable flame retardancy performance. Surprisingly, the mechanical properties of the copolyester elastomer used in the flame retardant thermoplastic composition according to the invention is affected only in limited extent by the presence of the nitrogen containing flame retardant. In so far there is such a negative effect, i.e. reduction in elongation at break or tensile strength, this effect is certainly limited, whereas in other cases this effect is clearly positive, exhibited by an increased elongation while the tensile strength at break is maintained at the same good level. This is even more surprising in view of the fact that nitrogen containing flame retardants, such as melamine based flame retardants and in particular melamine cyanurate, are known to negatively affect the mechanical properties in polymer compositions, certainly when used as the only flame retardant and in sufficiently high amounts for obtaining good flame retardancy properties. A further surprising effect is that mechanical properties of the flame retardant thermoplastic composition according to the invention are also retained, after treatment for a longer period under hot, humid conditions, at a level comparable to that of the original copolyester elastomer with hard blocks and soft blocks corresponding with the features (a) or (b) as described above.

The flame retardant thermoplastic composition according to the invention also shows better flame retardancy properties than corresponding compositions comprising a copolyether ester elastomer as used in the known composition of US-5,298,544 in combination with nitrogen containing flame retardants, in that either the flame retardancy is better when using the same type and amount of the nitrogen containing flame retardants and/or a V0 rating is obtained at lower loadings of the nitrogen containing flame retardants, if such a rating can be obtained at all for the corresponding composition comprising the copolyether ester elastomer. A further difference in favour of flame retardant thermoplastic composition according to the invention is that the mechanical properties of the corresponding flame retardant thermoplastic composition comprising the copolyether ester elastomer are certainly affected negatively by the nitrogen containing flame retardants, exhibited by lower values for elongation and tensile strength at break, which negative effect is already substantially at loading levels far below the level at which a V0 rating is obtained if any. In further search for alternative flame retardant thermoplastic compositions, also other flame retardants have been tested in combination with the copolyether ester elastomer as used in the known composition. Among these other flame retardants, a flame retardant system comprising aluminium diethylphosphinate was found to be able to provide a solid V0-rating. For obtaining a solid V0, much higher loadings of the alternative flame retardant system was required than needed for the nitrogen containing flame retardants in the inventive compositions. Moreover, the said aluminium diethylphosphinate based flame retardant system has a significant negative effect on the mechanical properties of the copolyether ester elastomer, resulting in significantly lower values for both the elongation at break and tensile strength compared to the corresponding copolyether ester elastomer.

Flame retardant thermoplastic composition comprising a thermoplastic elastomer and/or a halogen free flame retardant system comprising one or more of the features of the compositions according to the invention have been described in different patents or patent applications, as described below. None of these patents describe the inventive compositions or the effects thereof as according to the invention.

EP-0102115-B1 describes polyester ester block-copolymers with low melting soft blocks and high melting hard blocks composed of polyesters and linked by urethane linkages, as may also be used in the flame retardant thermoplastic composition according to the invention. EP-0102115-B1 does not describe any flame retardant compositions based on the said polyester ester block-copolymers, let alone the flame retardancy or mechanical properties thereof.

EP-0363321-B1 describes a flame retardant thermoplastic composition comprising melamine based flame retardants as halogen free flame retardant system. The melamine based flame retardants consisted of melamine salts of phosphonic acids, which were typically to be used in an amount of 1-100 pbw (parts by weight) relative to 100 pbw of a thermoplastic polymer. For the possible polymers that can be used as the thermoplastic polymer many polymers are mentioned, including block-copolyetheresters, which as said above are thermoplastic elastomers. Various examples are described in EP-0363321-B1 with flame retardancy test results showing different ratings. Only few examples, based on epoxy based polyether polyurethane showed a V-0 rating. The mechanical properties of those examples were not mentioned. However, none of the examples included a copolyetherester as mentioned in the above cited prior art, let alone copolyester as used in the compositions according to the invention or the effect thereof.

Flame retardant thermoplastic moulding compositions are also described in EP-0376237-A1. EP-0376237-A1 further describes moulded products made from the flame retardant thermoplastic moulding compositions, more particular "Kabelbinder" and Steckerleisten". The known flame retardant thermoplastic moulding compositions of EP-0376237-A1 consist of a thermoplastic polyamide (A), a thermoplastic polyetherester elastomer (B), melamine cyanurate (C), and a filler. The amount of (B), only 0.45-15 wt.%, as well as the amount of (C), only 0.05-1.99 wt.%, both relative to the total of (A), (B) and (C), are very low. Melamine cyanurate is a nitrogen containing flame retardant. EP-0376237-A1 explicitly states that the use of melamine cyanurate is problematic and when the amount becomes too large, it influences the mechanical properties.

EP-0868478-B1 describes flame retardant elastomer compositions comprising a thermoplastic elastomer and one or more nitrogen containing flame retardants. The known flame retardant elastomer compositions of EP-0868478-B1 are used for construction sheetings and have to comply with flame retardancy standards from the building industry (DIN 4102 B2). The nitrogen containing flame retardants are melamine condensates and melamine compounds, which are used in an amount of 5 to 30 wt.% based on the thermoplastic elastomer. Preferred compounds are melamine cyanurate and melam. The thermoplastic elastomer is chosen from the group consisting of polyurethane block copolymers, polyetheramide block copolymers, polyetherester block copolymers and polyester ester blockcopolymers. The examples in EP-0868478-B1 are with polyurethane block copolymers, polyetheramide block copolymers, and polyetherester block copolymers. Polyetherester block copolymers are preferred. None of the examples is with a polyester ester blockcopolymer. Also no test results according to the UL-94-V standard are mentioned in EP-0868478-B1, whereas DIN 4102 B2 is certainly not alike and likewise much less critical than UL-94-V. Although some of the copolyester elastomers in the composition according to the invention can be considered to be or are copolyester elastomers, neither copolyester elastomers as used in the composition according to the invention, nor the advantageous effects thereof, are mentioned in EP-0868478-B1. Apart from construction sheetings no other possible applications are mentioned.

Thermoplastic copolyester elastomers with hard blocks and soft blocks linked by urethane linkages are described in EP-0846712-B1. The hard blocks in the copolyester elastomers of EP-0846712-B1 are composed of polyesters, whereas the soft blocks are composed of segments of a low melting aliphatic polycarbonate polymer. Reported possible applications of the block copolymers include pipes, hoses, cable and sheets, and in particular bellows and seals for automotive applications. The said block copolymers can be made flame retardant with flame retardants preferably melamine cyanurate. No amounts of flame retardants are mentioned and mechanical and flame retardancy properties of the flame retardant elastomers are not are not described in EP-0846712-B1.

The copolyester elastomer in the flame retardant thermoplastic composition according to the invention comprises hard blocks consisting of segments of a hard polyester polymer, also denoted herein as hard polyester polymer segments. Next to that the copolyester elastomer comprises soft blocks consisting of segments of a soft polyester polymer, also denoted herein as soft polyester polymer segments. The soft polyester polymer segments are linked to the hard polyester polymer segments by urethane linkages. Urethane linkages can be formed by reacting a long chain aliphatic diol with an isocyanate modified polyester, or by reaction a hydroxyl functional polyester with an isocyanate modified long chain aliphatic diol.

Copolyester elastomer comprising soft polyester polymer segments linked to the hard polyester polymer segments by urethane linkages are generally considered as being part of the group of copolyester ester elastomers. Such copolyester ester elastomers can be made by letting react a low melting aliphatic polyester prepolymer diol and a high melting aromatic prepolymer diol with diisocyanate or by reaction an isocyanate capped prepolymer with a prepolymer diol. For the isocyanate capped prepolymer one can choose to either cap the low melting aliphatic polyester prepolymer diol or high melting aromatic prepolymer diol with a diisocyanate and than to let it react with the other diol. Other members of the group of copolyester ester elastomers include copolyester elastomer comprising soft polyester polymer segments linked to the hard polyester polymer segments by ester linkages. These latter copolyester ester elastomers can be made by separately preparing a low melting aliphatic polyester prepolymer and a high melting aromatic prepolymer, one of these prepolymers being a diol and the other being a dicarboxylic acid, and then mixing the two polymers and an esterification catalyst at elevated temperature in the melt under nitrogen. Once a transparent mixture is obtained, the esterification catalyst used in the process must be deactivated.

Such copolyester ester elastomers with ester linkages are not suited for making flame retardant compositions with nitrogen containing flame retardants in that such compositions perform less good in one or more of the properties in which the flame retardant compositions excel, i.e. flame retardancy, good retention of elastomeric properties upon addition of the nitrogen containing flame retardants as well as retention thereof after treatment under hot humid conditions.

The polyester polymer segments in the hard blocks suitably consists of repeating units derived from at least one alkylene diol and at least one aromatic or cycloaliphatic dicarboxylic acid.

The aromatic dicarboxylic acid in these polyester segments suitably is selected from the group consisting of terephthalic acid, isophthalic acid, phthalic acid, 2,6-naphthalenedicarboxylic acid and 4,4-diphenyldicarboxylic acid, and mixtures thereof.

Preferably, the aromatic dicarboxylic acid comprises terephthalic acid, more preferably consists for at least 50 mole %, still more preferably at least 90 mole %, or even fully consists of terephthalic acid, relative to the total molar amount of dicarboxylic acid in the hard polyester polymer segments.

The alkylene diol in the hard polyester segments preferably is a diol with 2-15, and particularly with 5-10 carbon atoms. The alkylene diol suitably is selected from the group consisting of ethylene glycol, propylene glycol, butylene glycol, 1,2-hexane diol, 1,6-hexamethylene diol, 1,4-butane diol, benzene dimethanol, cyclohexane diol, cyclohexane dimethanol, and mixtures thereof. Preferably, the alkylene diol comprises ethylene glycol and/or 1,4-butane diol, more preferably consists for at least 50 mole %, still more preferably at least 90 mole %, or even fully consists of ethylene glycol and/or 1,4-butane diol, relative to the total molar amount of alkylene diol in the polyester polymer segments.

In a preferred embodiment of the invention the polyester polymer segments in the hard blocks consist for at least 90 mole %, relative to the total molar amount of dicarboxylic acid and alkylene diol in the hard blocks, of repeating units derived from 1,4-butane diol and terephthalic acid.

The polyester polymer segments in the soft blocks suitably consists of repeating units derived from at least one alkylene diol and at least one aliphatic dicarboxylic acids, and/or from at least one lactone and/or hydroxyl functional aliphatic carboxylic acid.

Suitable aliphatic diols include ethylene glycol, 1,4-butanediol, 1,5-pentanediol, 1,6-hexanediol, 2,2-dimethyl-1,3-propanediol, and mixtures thereof. Also other glycols, such as 1,3- or 1,4-cyclohexanediol or 1,3- or 1,4-bis(hydroxymethyl)-cyclohexane, may be incorporated into the low melting components. Under some circumstances, for instance to increase the melt viscosity of the end-product, it may be recommended to incorporate some small amount of higher functional compounds. Examples of such compounds are trimethylol ethane, trimethylol propane and hexane triol.

Preferably, the aliphatic diol in the soft polyester polymer segments comprises 1,4-butanediol, 1,5-pentanediol, 1,6-hexanediol, 2,2-dimethyl-1,3-propanediol, and mixtures thereof in an amount of at least 50 mole %, still more preferably at least 70 mole %, or even more preferably at least 90 mole%, relative to the total molar amount of aliphatic diol in the soft polyester polymer segments, or even consists for 100 % of the said aliphatic diols.

Suitable aliphatic dicarboxylic acids are, for example, adipic acid, glutaric acid, pimelic acid, suberic acid, isosebacic acid and ricinoleic acid. Also aliphatic dicarboxylic acids having hetero atoms, such as thiodipropionic acid may be used in the low melting bifunctional compounds. In addition there still may be mentioned cycloaliphatic dicarboxylic acids such as 1,3- or 1,4-cyclohexane dicarboxylic acid and terephthalic acid and isophthalic acid, which may be comprised in the soft polyester segments in small amounts.

Preferably, the dicarboxylic acid in the soft polyester polymer segments comprises adipic acid, more preferably consists for at least 50 mole %, still more preferably at least 70 mole %, or even at least 90 mole%, relative to the total molar amount of dicarboxylic acid in the soft polyester polymer segments, or even consists for 100 % of adipic acid.

Other than being composed of the reaction products of short-to-medium-long chain aliphatic diols and aliphatic dicarboxylic acids, the low melting soft blocks may as well entirely or partly be composed of lactones, such as substituted and unsubstituted caprolactone or butyrolactone.

The procedure for preparing the low melting polyesters is known per se and similar to that used for preparing high melting polyesters. It may be realized for instance by polycondensation of polyfunctional, preferably bifunctional alcohols, hydroxycarboxylic acids, and lactones. By a proper choice of the mixing ratio of the above-mentioned components any desirable molecular weight and number and type of terminal groups may be obtained.

The urethane linkages in the polyester elastomer suitably consists of repeating units derived from at least one aliphatic or alicyclic diisocyanate and/or at least one aromatic diisocyanate. The urethane linkages can be represented by the formula [-(O)C-(H)N-R-N(H)-C(O)-], wherein R is an aliphatic group, an alicyclic or an aromatic group, which groups can optionally be heteroatom substituted.

Examples of suitable aliphatic diisocyanates are hexamethylene diisocyanate, dimethyl hexamethylene diisocyanate, trimethyl hexamethylene diisocyanate, metaxylylene diisocyanate, paraxylylene diisocyanate, tetramethylene diisocyanate. Suitable diisocyanates having an alicyclic group include isophoron diisocyanate, dicyclohexylmethane diisocyanate and 1,4-cyclohexane diisocyanate. Examples of suitable aromatic diisocyanates include: 1-chloro-2,4-phenylene diisocyanate, 2,4-toluene diisocyanate, tetramethylphenylene diisocyanate, diphenylmethane-4,4'-diisocyanate (MDI), metaphenylene diisocyanate, paraphenylene diisocyanate, naphthalene-1,5-diisocyanate, diphenyl-4,4'-diisocyanate, phenylmethane-4,4'-diisocyanate, biphenyldimethylmethane-4,4'-diisocyanate, benzophenone-4,4'-diisocyanate, biphenylether diisocyanate and biphenylsulphide diisocyanate, 3,3'-dimethyldiphenyl-4,4'-diisocyanate, 3,3'-dimethoxydiphenyl-4,4'-diisocyanate, 3,3'-dichlorodiphenyl-4,4'-diisocyanate, 3,3'-dichlorodiphenyl-4,4'-diisocyanate, benzofuran-2,7-diisocyanate.

Preferably, the diisocyanate from the urethane linkages are derived comprise diphenylmethane-4,4'-diisocyanate (MDI), more preferably in an amount of at least 50 mole %, still more preferably at least 70 mole %, or even at least 90 mole%, relative to the total molar amount of diisocyanate in the soft polyester polymer segments, or even consists for 100 % of diphenylmethane-4,4'-diisocyanate MDI.

The copolyester elastomer in the flame retardant composition according to the invention preferably comprises hard and soft segments linked by urethane linkages, more preferably the soft segments comprise or even consist of segments of a soft polyester polymer. The effect of the urethane linkages is that the performance of the compositions in the UL-94-V flame retardancy test is improved and the minimum amount of melamine based flame retardants needed for obtaining a V0 rating is reduced while better mechanical properties, more particular a higher elongation-at-break is obtained. These effects are further enhanced with the soft segment comprise segments of a soft polyester polymer.

Still more preferably, the urethane linkages are present in the copolyester elastomer in an amount in the range of 1-15 wt.%, relative to the total weight of the copolyester elastomer, and wherein the weight of the urethane linkages based on structural elements represented by the formula [-(O)C-(H)N-R-N(H)-C(O)-].

Copolyester elastomers comprising hard and soft polyester segments linked by urethane linkages, as well as the synthesis thereof, are described in EP-0102115-B1, which patent forms an integral part of this invention by reference.

In a preferred embodiment of the invention, the hard blocks of copolyester elastomer have a melting point (Tm) of at least 150°C, preferably at least 165 °C, 180 °C, 200°C or even at least 220°C and the soft blocks have a glass transition temperature (Tg) of at most 20°C, preferably at most 0°C, -20°C, -40°C, or even at most -50°C. The advantage of the copolyester elastomer having the said minimum Tm is that it has better mechanical strength and better retention of the elongation upon treatment with hot humid conditions, whereas a lower maximum Tg leads to more flexible products with higher elongation.

With the term melting point (temperature) is herein understood the temperature measured by DSC with a heating rate of 10°C/min falling in the melting temperature range and showing the highest melting rate. With the term glass transition point is herein understood the temperature measured by DSC with a heating rate of 10°C/min falling in the glass transition temperature range and showing the highest glass transition rate.

In another preferred embodiment of the invention, the flame retardant thermoplastic composition has a hardness between 20 and 70 Shore D, preferably between 30 and 60, still more preferably 40 and 50 Shore D.

Next to the copolyester elastomer, the flame retardant thermoplastic composition may comprise other thermoplastic polymer elastomers, such as polyetherester elastomers and polyetheramide elastomers, as well as other polymers, such polyesters, polyamides and polycarbonates. If any polymers other than the copolyester elastomer are present, thermoplastic polymer elastomers are preferred.

Preferably, the flame retardant thermoplastic composition comprises the said copolyester elastomer in an amount of at least 50 wt.%, more preferably at least 75wt.%, 90 wt.% or even at least 95 wt.%, relative to the total weight of polymer in the flame retardant thermoplastic composition. The effect of the higher copolyester elastomer content is that the effect of the invention is further enhanced.

Suitable nitrogen containing flame retardants, that can be used in the flame retarded thermoplastic composition according to the invention are, for example, flame retardants based on triazines, guanidines, cyanurates, and isocyanurates, and mixtures and salts thereof. Suitable triazine based flame retardants are, for example, melamine based flame retardants, which include melamine, melamine condensation products, melamine cyanurate and melamine salts, and combinations thereof.

Suitable melamine condensation products are for example melam, melem, and melon, and higher condensation products of melamine. These condensation products generally comprise mixtures of different oligomers of melamine. As a major component, melam, melem, and melon comprise respectively dimers, trimers and tetramers of melamine. Melamine condensation products can, for example, be obtained with the process described in WO-A-96/16948. Suitable salts of the nitrogen containing flame retardants are, for example, borates and oxalates, and salts of phosphor containing compounds, such as phosphates, phospinates and phosphonates and oligomoric and polymeric derivatives thereof. Examples of suitable nitrogen and phosphor containing compounds are ammonium polyphosphate and melamine polyphosphate.

Preferably the nitrogen containing flame retardant is a melamine based flame retardant. The advantage thereof is that better flame retardancy properties are obtained as measured according to UL-94-V standard at the same or lower loadings, and that higher elongations are obtained at loadings with comparable flame retardancy performance according to UL-94-V.

Suitable melamine based flame retardants include melamine, melamine condensation products, melamine cyanurate and melamine salts, and combinations thereof. Examples of melamine salts include melamine (poly)phosphates, e.g. available under the trade name Melapur200 from Ciba Geigy, melamine borates and melamine oxalates.

More preferably, the melamine based flame retardant comprises a melamine condensation product and/or melamine cyanurate, more preferably melamine cyanurate. The advantage of melamine cyanurate is that it provides an even that better flame retardancy properties are obtained at the same or lower loadings, and/or that elongations are better retained upon treatment under hot humid conditions.

Melamine cyanurate is the reaction product of preferably equimolar amounts of melamine and cyanuric acid or isocyanuric acid. It can be made by conversion of aqueous solutions of the starting compounds at 90 to 100°C. Melamine cyanurate is commercially available as a white product with a particle size distribution wherein the particle size can vary over a large range, generally in the range of 0.1-100 µm. The melamine cyanurate that is used is preferable of small particle size, or can be easily dispersed into small particles in a polyester continuous phase during mixing. Suitably, the melamine cyanurate has a particle size distribution with a median particle size (d50) smaller than about 25 micrometer (µm) and larger than 0.5 µm; preferably the median particle size d50 is in the range of 1-15 µm, more preferably in the range of 2-10 µm. Very suitably, the median particle size d50 is in the range of 2.5-5 µm.

With the median particle size d50 is herein understood the particle size relative to which 50 wt.% of the particles have a smaller particle size and 50 wt.% of the particles a larger particle. This median particle size can be determined as D₅₀ according to ASTM standard D1921-89, method A.

The nitrogen containing flame retardant may be present in the flame retardant thermoplastic composition according to the invention in an amount varying over a wide range, which amount may be as low as 7.5 wt.% or lower and also as high as 40 wt.% and higher. Preferably, the nitrogen containing flame retardant is present in an amount between 7.5 and 40 wt.%, and more preferably in the range of 10-35 wt.%, still more preferably 15-25 wt.%. Herein the weight percentage (wt.%) of the nitrogen containing flame retardant is relative to the total weight of the flame retardant thermoplastic composition. The advantage of a higher minimum amount is that better flame retardant properties are obtained, whereas with a lower maximum amount better mechanical properties are obtained.

The flame retardant thermoplastic composition according to the invention may comprise, next to the nitrogen containing flame retardant, other flame retardant compounds or flame retardant synergists to further enhance the flame retardant properties of the thermoplastic composition. For these other flame retardant compounds and flame retardant synergists, together indicated as other flame retardant components, any flame retardant compound suitable for use in thermoplastic elastomers or any flame retardant synergist suitable for use in combination with nitrogen containing flame retardants may be used. Preferably these other flame retardant components are halogen free. Preferably, these other flame retardant components are used in such an amount that the mechanical properties, in particular the elongation and/or the retention thereof upon treatment under hot humid conditions are not affected or only so in limited extent. Suitable types and amounts of these other flame retardant components can be determined by the person skilled in the art of making flame retardant thermoplastic composition by routine experiments and testing.

A flame retardant synergist is herein understood to be a compound that further improves the flame retardant properties of the inventive polyester composition. Suitably, the flame retardant synergist is an inorganic compound such as talc, a metal oxide, a metal sulphide or a metal borate. An example of a suitable metal borate is zinc borate.

Preferably, the other flame retardant components, if present at all, are present in an amount of 0.01-10 wt.%, more preferably 0.1-5wt.%, still more preferably 0.2-2 wt.%, relative to the total weight of the thermoplastic composition. Most preferably the amount is 0 wt.%, i.e. there are no other flame retardant components present.

In addition to the constituents mentioned here above, i.e. the polymeric components and the flame retardant system, the flame retarded thermoplastic composition according to the invention may further comprise one or more auxiliary additives, such as fillers, reinforcing agents, stabilizers, processing aids, colouring agents.

The fillers, reinforcing agents and other auxiliary additives that can be used in the flame retarded polyester composition may be any such compound conventionally used in flame retardant thermoplastic compositions.

Fillers and reinforcing agents generally consist of inorganic fibrous materials and powder consisting of small particles, typically with a particle size below 1 mm, preferably below 0.1 mm, more preferably below 10 µm. Suitable examples of fillers are magnesium carbonate, kaolin, quartz, calcium carbonate. Suitable reinforcing agents include glass fibers and carbon fibres. The fillers and reinforcing agents are suitably used in a total amount of up to and even exceeding 50 wt.% of the total composition. Preferably, fillers and reinforcing agents are present in a total amount of 0-50 wt.%, more preferably 0.01-30 wt.%, or 0.1-20 wt.%, and most preferably 1-10 wt.%, relative to the total weight of the flame retardant thermoplastic composition.

The other auxiliary additives are suitably present in a total amount of 0-20 wt.%, more preferably 0.01-10 wt.%, or 0.1-5 wt.%, and most preferably 1-3 wt.%, relative to the total weight of the flame retardant thermoplastic composition

Suitable stabilizers include, for example, trans-esterification inhibitors, UV-stabilizers, heat stabilizers and anti-oxidants, as well as combined thermo-oxidative stabilizers. Additives suitable as heat stabilizer and/or and anti-oxidant are, for example, hindered phenols, hydrochinones. Suitable UV-stabilisers are, for example, benzophenone, benzotriazoles, resorcinols, and salycilates. Stabilizers are suitably present in a total amount of 0-5 wt.%, preferably 0.01-3 wt.%, or 0.05-2 wt.%, and most preferably 0.1-1 wt.%, relative to the total weight of the flame retardant thermoplastic composition.

Suitable processing aids include mould release agents, such as fatty acids and derivatives thereof, including stearic acid, stearic alcohol and stearic amides, lubricants or viscosity reducers, and nucleating agents, such as talcum. These additives are suitably used in a total amount of 0-3 wt.%, preferably 0.01-2 wt.%, more preferably 0.1-1 wt.%, relative to the total weight of the flame retardant thermoplastic composition.

Suitable colouring agents include pigments, such as titanium dioxide and carbon black, and dies, such as nigrosine. Colouring agents are also are suitably used in a total amount of 0-3 wt.%, preferably 0.01-2 wt.%, more preferably 0.1-1 wt.%, relative to the total weight of the flame retardant thermoplastic composition.

In a specific embodiment of the invention, the flame retarded thermoplastic composition is a halogen free flame retarded thermoplastic composition, consisting of a.

In a preferred embodiment of the invention, the flame retarded thermoplastic composition is a halogen free flame retarded thermoplastic composition, consisting of
A) a copolyester elastomer comprising hard blocks and soft blocks consisting of segments of hard and soft polyester polymers linked by urethane groups, and optionally
B) one or more other polymeric components, wherein (A) is present in a amount of at least 50 wt.% relative to the total weight of (A) and (B),
C) between 7.5 and 40 wt.% of a melamine based flame retardant, and
D) 0-10 wt.% of one or more other nitrogen containing free flame retardants and/or other halogen free flame retardant components,
E) 0-20 wt.% of one or more fillers and reinforcing agents, and
F) 0-10 wt.% of one or more other auxiliary additives,
wherein the weight percentages of (C), (D), (E) and (F) are relative to the total weight of the flame retarded thermoplastic composition, and wherein the sum of (A)-(F) is 100 %.

In a more preferred embodiment of the invention, the flame retarded thermoplastic composition is a halogen free flame retarded thermoplastic composition, consisting of
A) a copolyester elastomer comprising hard blocks and soft blocks consisting of segments of hard and soft polyester polymers linked by urethane groups, and optionally
B) other polymeric components, wherein (A) is present in a amount of at least 50 wt.% relative to the total weight of (A) and (B),
C) 15-35 wt.% melamine cyanurate, and
D) 0-5 wt.% of one or more other melamine based flame retardant and/or other nitrogen containing flame retardant and/or other halogen free flame retardant components,
E) 0-10 wt.% of one or more fillers and reinforcing agents, and
F) 0-5 wt.% of one or more other auxiliary additives,
wherein the weight percentages of (C), (D), (E) and (F) are relative to the total weight of the flame retarded thermoplastic composition, and wherein the sum of (A)-(F) is 100 %.

The copolyester elastomers used in the flame retarded thermoplastic composition according to the invention, as well as these inventive compositions and any preferred embodiments thereof, can be made using conventional methods. The preparation of copolyester elastomers comprising hard blocks and soft blocks consisting of segments of hard and soft polyester polymers linked by urethane groups, is described for example in EP-0102115-B1. For the preparation of the flame retarded thermoplastic composition, one can suitably use melt-mixing equipment, such as single screw extruders, double screw extruders, Brabender mixers and Banburry kneaders.

The inventive compositions are very suited for making moulded parts by means of various moulding techniques, including injection moulding and extrusion moulding and over moulding, in particular for the preparation of flexible moulded parts for various high demanding technical applications. For these applications, the good flame retardancy properties in combination with the high elasticity and retention of mechanical properties upon treatment under hot humid conditions are very advantageous.

The invention therefore also relates to the use of the flame retardant thermoplastic composition according to the invention in a moulding process for making an injection moulded part, an extrusion moulded part or an overmoulded part.

The invention also relates to a shaping process for making a moulded part comprising a step wherein the moulded part is shaped by injection moulding or extrusion moulding of an elastomer composition according to the invention, or any preferred embodiment thereof, or overmoulding of an elastomer composition according to the invention, or any preferred embodiment thereof over a core part.

The invention also relates to a moulded part at least partly made from a flame retardant thermoplastic elastomer composition according to the invention, or any preferred embodiment thereof, preferably being a an injection moulded part, an extrusion moulded part or an over-moulded part.

In one preferred embodiment, the moulded part is an over- moulded part comprising a core part over-moulded with a layer of the flame retardant thermoplastic elastomer composition according to the invention, e.g. PC/ABS structures over-moulded with the flame retardant thermoplastic elastomer, electrical cable sheeting, multilayer hoses.

In another preferred embodiment, the moulded part is an extrusion moulded part selected from the group consisting of monofilaments, e.g. for suspension seatings, electrical cable sheeting, for example insulating layers and/or jacket layers, hoses, tubes, e.g. convoluted tubes, air brake tubes, air ducts, and fuel tubes, sealings, such as sound deadening profiles for window sealing, and alike.

In a further preferred embodiment, the moulded part is an injection moulded part selected from the group consisting of shoe ware, mechanical parts such as cable ties, vibrational and noise dampeners, electrical and electronic parts, e.g. connectors, automobile parts, e.g. inboard boots and joint velocity boots (or jvc-boots), engine part, e.g. low noise gears, parts of and housing for office automation apparatuses and electrical household appliances, and parts for use in public transport such as boats, busses, trains and airplanes.

The moulded part according to the invention preferably is a Net-Shaped-Part at least partly made-from-and-consisting-of one or more flame retarding thermoplastic compositions according to the invention.

With the term "Net-Shaped-Part" is herein understood a three dimensional free standing structure explicitly not being a flat part or a sheet. With the term "at least partly made-from-and-consisting-of is herein understood that the Net-Shaped-Part may have been made only from the said flame retardant thermoplastic composition and consequently will consist integrally of the said flame retardant thermoplastic composition, or that one or more parts of the Net-Shaped-Part may have been made from the said flame retardant thermoplastic composition and consequently will consist of the said flame retardant thermoplastic composition, whereas one or more other parts of the Net-Shaped-Part may have been made from another composition or other compositions, which other composition or compositions may optionally have been blended with the said flame retardant thermoplastic composition, and consequently these one or more other parts will consist of the said other composition or compositions optionally blended with the said flame retardant thermoplastic composition.

The invention is further illustrated with the following examples and comparative experiments.

### Materials

- TPE-E-1: Polyetherester elastomer comprising hard segments consisting of polybutyleneterephthalate segments and soft segments consisting of EO/PO polyether blockcopolymer; hardness Shore-D 38.
- TPE-E-2: Polyetherester elastomer comprising hard segments consisting of polybutyleneterephthalate segments and soft segments consisting of PTMG polyether soft segments; hardness Shore D40
- TPE-E-3: Polyesterester consisting of hard segments consisting of polybutyleneterephthalate segments and soft segments consisting of polylactone segments linked with urethane groups; hardness Shore D55.
- TPE-E-4: Polycarbonate ester elastomer consisting of polybutyleneterephthalate hard segments and soft segments consisting of polycarbonate soft segments linked with urethane groups.
- Mecy:: Melamine cyanurate (MC50; particle size distribution with a d50 of about 4.2 µm and a d99 of about 45 µm)
- Exolit 1312:: Blend of aluminium diethylphosphinate, melamine polyphosphate, and Zinc Borate Clariant

Moulding compositions of Examples I-VI (EX-I - EX-VI) according to the invention and Comparative Experiments A-L (CE-A - CE-L) were prepared and tested as described below. The compositions and test results are presented in Tables 1 and 2.

### Compounding

For the preparations of moulding compositions, ingredients were compounded in ratios as indicated in Table 1. The moulding compositions were prepared by melt-blending the TPE-E's with the flame retardant components and stabilizer package on a ZSK 30/33 twin-screw extruder with screw speed 200 rpm, throughput 10 kg/hr, and melt temperature regulated at 250°C, extruding the melt from the extruder through a die, and cooling and granulating the melt. The granules obtained by compounding in the extruder were dried for 24 hours at 120°C, prior to further use.

### Moulding of test samples

Test samples for testing the mechanical properties and the flame retardancy properties were prepared on an injection-moulding machine of type Engel 80 A. For the injection moulding set temperatures of 235-245°C were used. The mould temperature was 90°C. Cycle times for the test specimens were about 50 sec.

### Test methods

Mechanical properties: Tensile tests were performed according to ISO 527/1A using dry-as-moulded samples. Dimensions of tensile test specimens: thickness 4 mm.

Flame retardancy: Sample preparation and testing was performed according to UL-94-V standard, with test specimens having a thickness of 1.6 mm.

Hydrolysis resistance: for this test the sample cable is kept in a temperature cycling chamber for 96 hours at 85°C and 95% relative humidity. After this conditioning, the mechanical properties of the test specimens were tested as described above.

Compounds with the compositions of Examples I-VI (EX-I - EX-VI) according to the invention and Comparative Experiments A-L (CE-A - CE-L) were prepared and tested as described above. The compositions and test results are presented in Tables 1 and 2.

**Table 1. Compositions (in parts by weight) and test results for Comparative Experiments A-C and Examples I-VI**

| | CE-A | CE-B | CE-C | EX-I | EX-II | EX-III | EX-IV | EX-V |
|---|---|---|---|---|---|---|---|---|
| TPE-E-1 | 100 | | | | | | | |
| TPE-E-2 | | 100 | | | | | | |
| TPE-E-3 | | | 100 | 92.5 | 85 | 80 | 75 | 70 |
| Mecy | | | | 7.5 | 15 | 20 | 25 | 30 |
| | | | | | | | | |
| UL-94-V-rating (n.c. = non-clasified) | Fail (n.c.) | Fail (n.c.) | Fail (n.c.) | 60/40 V0/V2 | 100% V0 | 100% V0 | 100% V0 | 100% V0 |
| Tensile strength max [Mpa] | 16 | 19.1 | 20.8 | | 23.9 | 21.4 | 22.7 | |
| Elongation at break (%) | 670 | 893 | 320 | | 392 | 424 | 324 | |
| After 96 hours at 85°C/95% RH: | | | | | | | | |
| Tensile strength max [Mpa] | 15.5 | 17.5 | 16.8 | | | 19.5 | | |
| Elongation at break (%) | 680 | 930 | 350 | | | 380 | | |

**Table 2. Compositions (in parts by weight) and test results for Comparative Experiments D-L.**

| | CE-D | CE-E | CE-F | CE-G | CE-H | CE-I | CE-J | CE-K | CE-L |
|---|---|---|---|---|---|---|---|---|---|
| TPE-E-1 | 80 | 70 | 60 | | | 80 | 70 | 65 | |
| TPE-E-2 | | | | 70 | | | | | 70 |
| TPE-E-4 | | | | | 70 | | | | |
| Mecy | 20 | 30 | 40 | 30 | 30 | | | | |
| Exolit | | | | | | 20 | 30 | 35 | 30 |
| | | | | | | | | | |
| UL-94-V-rating | 100% V2 | 60/40V0 /V2 | 100% V2 | | 100% V2 | 100%V 2 | 70/30 V0/V2 | 100% V0 | 100% V2 |
| Tensile strength max [Mpa] | 10 | 9 | 10.5 | 7.9 | | 9.5 | 7.7 | 6 | 8.5 |
| Elongation at break (%) | 400 | 130 | 40 | 604 | | 475 | 370 | 205 | 605 |
| After 96 hours at 85°C/95% RH: | | | | | | | | | |
| Tensile strength max [Mpa] | | | | | | 7.5 | 6.0 | | 6.5 |
| Elongation at break (%) | | | | | | 250 | 120 | | 380 |

## Claims

1. Flame retardant thermoplastic composition comprising polymer comprising a thermoplastic elastomer and a halogen free flame retardant system **characterized in that**
(i) the thermoplastic elastomer comprises a copolyester elastomer comprising (a) hard blocks consisting of segments of hard polyester polymers and soft blocks consisting soft polyester polymers linked by urethane groups and
(ii) the halogen free flame retardant system comprises a nitrogen containing flame retardant.

2. Flame retardant thermoplastic composition according to claim 1, wherein the copolyester elastomer comprises hard blocks consisting of polybutyleneterephthalate and soft blocks consisting of polylactone linked by urethane groups.

3. Flame retardant thermoplastic composition according to claim 1 or 2, wherein the copolyester elastomer is present in an amount of at least 50 wt. %, relative to the total weight of polymer in the composition.

4. Flame retardant thermoplastic composition according to any of claims 1-3,
wherein the nitrogen containing flame retardant comprises a melamine based flame retardant.

5. Flame retardant thermoplastic composition according to any of claims 1-4,
wherein the nitrogen containing flame retardant is present in an amount between 7.5 and 40 wt.%, relative to the total weight of the flame retardant thermoplastic composition.

6. Flame retarded thermoplastic composition according to any of claims 1-5, consisting of
A) the copolyester elastomer (i) of claim 1, and optionally
B) one or more other polymeric components, wherein (A) is present in a amount of at least 50 wt.% relative to the total weight of (A) and (B), and wherein the sum of (A) and (B) is 20-100 wt.%, relative to the total weight of the flame retarded thermoplastic composition,
C) between 7.5 and 40 wt.% of the nitrogen containing flame retardant (ii) of claim 1, and optionally
D) 0-10 wt.% of one or more other halogen free flame retardant components,
E) 0-50 wt.% of one or more fillers and reinforcing agents, and
F) 0-20 wt.% of one or more other auxiliary additives,
wherein the sum of (A)-(F) is 100 % and wherein the weight percentages of (C), (D), (E) and (F) are relative to the total weight of the flame retarded thermoplastic composition.

7. Use of a flame retardant thermoplastic composition according to any of claims 1-6 in a moulding process for making an injection moulded part, an extrusion moulded part or an overmoulded part.

8. Shaping process for making a moulded part comprising a step wherein the moulded part is shaped by injection moulding or extrusion moulding of an elastomer composition according to any of claims 1-6, or overmoulding of an elastomer composition according to any of claims 1-6 over a core part.

9. Moulded part at least partly made from a flame retardant thermoplastic elastomer composition according to any of claims 1-6, preferably being a an injection moulded part, an extrusion moulded part or an over-moulded part.

## Patentansprüche

1. Flammhemmende thermoplastische Zusammensetzung, die Polymer umfasst, das ein thermoplastisches Elastomer und ein halogenfreies Flammhemmsystem umfasst, **dadurch gekennzeichnet, dass**
(i) das thermoplastische Elastomer ein Copoly-esterelastomer umfasst, umfassend (a) harte Blöcke, die aus Segmenten von harten Polyesterpolymeren bestehen, und weiche Blöcke, die aus weichen Polyesterpolymeren bestehen, verknüpft durch Urethangruppen, und
(ii) das halogenfreie Flammhemmsystem einen stickstoffhaltigen Flammhemmer umfasst.

2. Flammhemmende thermoplastische Zusammensetzung nach Anspruch 1, wobei das Copolyesterelastomer harte Blöcke, die aus Polybutylenterephthalat bestehen, und weiche Blöcke umfasst, die aus Polylacton bestehen, verknüpft durch Urethangruppen.

3. Flammhemmende thermoplastische Zusammensetzung nach Anspruch 1 oder 2, wobei das Copolyesterelastomer in einer Menge von mindestens 50 Gew.% vorhanden ist, bezogen auf das Gesamtgewicht an Polymer in der Zusammensetzung.

4. Flammhemmende thermoplastische Zusammensetzung nach einem der Ansprüche 1 bis 3, wobei der stickstoffhaltige Flammhemmer einen Flammhemmer auf Melaminbasis umfasst.

5. Flammhemmende thermoplastische Zusammensetzung nach einem der Ansprüche 1 bis 4, wobei der stickstoffhaltige Flammhemmer in einer Menge zwischen 7,5 und 40 Gew.% vorhanden ist, bezogen auf das Gesamtgewicht der flammhemmenden thermoplastischen Zusammensetzung.

6. Flammgehemmte thermoplastische Zusammensetzung nach einem der Ansprüche 1 bis 5, bestehend aus
A) dem Copolyesterelastomer (i) nach Anspruch 1 und gegebenenfalls
B) einer oder mehreren anderen polymeren Komponenten, wobei (A) in einer Menge von mindestens 50 Gew.% vorhanden ist, bezogen auf das Gesamtgewicht von (A) und (B), und wobei die Summe von (A) und (B) 20 bis 100 Gew.% beträgt, bezogen auf das Gesamtgewicht der flammgehemmten thermoplastischen Zusammensetzung,
C) zwischen 7,5 und 40 Gew.% des stickstoffhaltigen Flammhemmers (ii) nach Anspruch 1 und gegebenenfalls
D) 0 bis 10 Gew.% von einer oder mehreren anderen halogenfreien Flammhemmkomponenten,
E) 0 bis 50 Gew.% von einem oder mehreren Füllstoffen und Verstärkungsmitteln, und
F) 0 bis 20 Gew.% von einem oder mehreren anderen Hilfsadditiven,
wobei die Summe von (A) bis (F) 100 % ist und wobei die Gewichtsprozentsätze von (C), (D), (E) und (F) sich auf das Gesamtgewicht der flammgehemmten thermoplastischen Zusammensetzung beziehen.

7. Verwendung einer flammhemmenden thermoplastischen Zusammensetzung nach einem der Ansprüche 1 bis 6 in einem Formungsverfahren zur Herstellung eines spritzgegossenen Teils, eines extrusionsgeformten Teils oder eines überspritzten Teils.

8. Formgebungsverfahren zur Herstellung eines Formteils, umfassend einen Schritt, wobei das Formteil durch Spritzguss oder Extrusionsformen einer Elastomerzusammensetzung nach einem der Ansprüche 1 bis 6 oder Überspritzen einer Elastomerzusammensetzung nach einem der Ansprüche 1 bis 6 über ein Kernteil geformt wird.

9. Formteil, das mindestens teilweise aus einer flammhemmenden thermoplastischen Elastomerzusammensetzung nach einem der Ansprüche 1 bis 6 hergestellt ist und vorzugsweise ein spritzgegossenes Teil, ein extrusionsgeformtes Teil oder ein überspritztes Teil ist.

## Revendications

1. Composition thermoplastique ignifugeante comprenant un polymère comprenant un élastomère thermoplastique et un système ignifugeant sans halogène **caractérisée en ce que**
(i) l'élastomère thermoplastique comprend un élastomère de copolyester comprenant (a) des blocs durs composés de segments de polymères de polyester durs et des blocs mous composés de polymères de polyester mous liés par des groupes uréthane et
(ii) le système ignifugeant sans halogène comprend un ignifugeant contenant de l'azote.

2. Composition thermoplastique ignifugeante selon la revendication 1, dans laquelle l'élastomère de copolyester comprend des blocs durs composés de téréphtalate de polybutylène et des blocs mous composés de polylactone liés par des groupes uréthane.

3. Composition thermoplastique ignifugeante selon la revendication 1 ou 2, dans laquelle l'élastomère de copolyester est présent dans une quantité d'au moins 50 % en poids, rapporté au poids total de polymère dans la composition.

4. Composition thermoplastique ignifugeante selon l'une quelconque des revendications 1 à 3, dans laquelle l'ignifugeant contenant de l'azote comprend un ignifugeant à base de mélamine.

5. Composition thermoplastique ignifugeante selon l'une quelconque des revendications 1 à 4, dans laquelle l'ignifugeant contenant de l'azote est présent dans une quantité comprise entre 7,5 et 40 % en poids, rapporté au poids total de la composition thermoplastique ignifugeante.

6. Composition thermoplastique ignifugée selon l'une quelconque des revendications 1 à 5, composée de
A) l'élastomère de copolyester (i) de la revendication 1, et éventuellement
B) un ou plusieurs autres composants polymères, (A) étant présent dans une quantité d'au moins 50 % en poids, rapporté au poids total de (A) et (B), et la somme de (A) et (B) représentant 20-100 % en poids, rapporté au poids total de la composition thermoplastique ignifugée,
C) entre 7,5 et 40 % en poids de l'ignifugeant contenant de l'azote (ii) de la revendication 1, et éventuellement
D) 0-10 % en poids d'un ou plusieurs autres composants ignifugeants sans halogène,
E) 0-50 % en poids d'une ou plusieurs charges et agents de renforcement, et
F) 0-20 % en poids d'un ou plusieurs autres additifs auxiliaires,
dans laquelle la somme de (A) - (F) représente 100 % et dans laquelle les pourcentages pondéraux de (C), (D), (E) et (F) se rapportent au poids total de la composition thermoplastique ignifugée.

7. Utilisation d'une composition thermoplastique ignifugeante selon l'une quelconque des revendications 1 à 6 dans un procédé de moulage pour fabriquer une pièce moulée par injection, une pièce moulée par extrusion ou une pièce surmoulée.

8. Procédé de formage pour fabriquer une pièce moulée comprenant une étape dans laquelle la pièce moulée est formée par moulage par injection ou moulage par extrusion d'une composition élastomère selon l'une quelconque des revendications 1 à 6, ou surmoulage d'une composition élastomère selon l'une quelconque des revendications 1 à 6 sur une partie centrale.

9. Pièce moulée au moins partiellement fabriquée à partir d'une composition élastomère thermoplastique ignifugeante selon l'une quelconque des revendications 1 à 6, étant de préférence une pièce moulée par injection, une pièce moulée par extrusion ou une pièce surmoulée.
